# EUROPÄISCHE PATENTSCHRIFT

(11) **EP 0 753 247 B1**
(45) Veröffentlichungstag und Bekanntmachung des Hinweises auf die Patenterteilung: **05.09.2001**
(21) Anmeldenummer: 96108137.9
(22) Anmeldetag: 22.05.1996
(51) Int. Cl.: A01D 78/10, A01D 80/00

(54) **Landwirtschaftliche Arbeitsmaschine, insbesondere Vielkreisel-Heuwender**
Agricultural working machine, especially multiple rotor hay turner
Machine de travail agricole, notamment faneuse à plusieurs rotors

(30) Priorität: 12.07.1995 DE 19525344
(43) Veröffentlichungstag der Anmeldung: 15.01.1997
(73) Patentinhaber: CLAAS SAULGAU GMBH, D-88340 Saulgau (DE)
(72) Erfinder: Deni, Franz, 88348 Saulgau-Bogenweiler (DE)

(56) Entgegenhaltungen:
- EP-A- 0 536 071
- EP-A- 0 571 794
- DE-A- 4 128 501

## Beschreibung

Die Erfindung bezieht sich auf eine landwirtschaftliche Arbeitsmaschine, die von einem Traktor gezogen wird, insbesondere Vielkreisel-Heuwender, nach dem Oberbegriff des Patentanspruchs 1.

Derartige Arbeitsmaschinen sind bereits in verschiedenen Ausführungen und unterschiedlichen Antriebsvarianten bekannt. So ist beispielsweise in der DE-OS 41 28 501 eine Heuwerbungsmaschine mit 8 drehbaren Kreiselrechen beschrieben, die über einen Tragrahmen mit der Dreipunkt-Hubvorrichtung eines Traktors gekoppelt ist. Dabei sind an einem Mittelträger mit 2 Kreisel-Rechen mehrere miteinander gelenkig verbundene Seitenträger für weitere Kreiselrechen angelenkt, wobei jedem Seitenträger ein Kreiselrechen zugeordnet ist, und die Seitenträger von der breiten Arbeitsstellung in eine die Maschinenbreite verringernde Transportstellung schwenkbar sind. Zur Überführung der Seitenträger aus der Arbeitsstellung in die Transportstellung sind die dem Mittelträger benachbarten ersten Seitenträger und die sich daran anschließenden zweiten Seitenträger jeweils um etwa horizontale, fahrtrichtungsparallele Achsen aufwärts und die den zweiten Seitenträgern benachbarten dritten Seitenträger jeweils um etwa vertikale Klappachsen nach hinten schwenkbar. Nachteilig bei dieser Ausführung ist,neben der großen Transporthöhe, die Entlastung der Vorderräder des Traktors in der Transportstellung, sowie das unbedingte Vorhandensein einer ausreichend starken Dreipunkt-Hydraulik.

Zur Vermeidung dieser Nachteile sind bereits gezogene Heuwender bekannt (beispielsweise aus dem Prospekt der Fa. Kuhn über "Giro-Heuer GF 8501 T"), die beim Straßentransport durch ein zusätzliches, in die Maschine integriertes und mit Transporträdern versehenes Fahrgestell getragen werden. Im Arbeitseinsatz wird dieses Fahrgestell hydraulisch angehoben und oberhalb der Zinkenkreisel positioniert. Da die seitlichen Tragarme mit den Zinkenkreiseln jedoch nach wie vor in der Transportstellung nach oben geschwenkt werden, bleibt die große Transporthöhe und die damit verbundene hohe Kippgefahr, besonders in Hanglagen und beim Durchfahren von Kurven, weiterhin bestehen. Außerdem erfordert das zusätzliche Fahrgestell einen hohen baulichen Mehraufwand. Die beiden mittleren Tasträder der Zinkenkreisel werden in der Arbeitsstellung durch das Fahrgestell zusätzlich belastet und sinken dadurch auf einem weichen Feldboden dementsprechend tiefer ein, so daß keine ausreichende Bodenanpassung über die gesamte Arbeitsbreite gewährleistet ist.

Bei den bekannten Kreiselheuwendern erfolgt die Verbindung der Antriebswellen für die Zinkenkreisel über Klauen-Kupplungen, Doppelkreuzgelenke oder Zahnradgetriebe. Da bei den Klauen-Kupplungsverbindungen (US-A 3583139) beim Schwenken von der Arbeits- in die Transportstellung eine Unterbrechung des Antriebes erfolgt, muß beim Wiederherstellen der Antriebsverbindung in der Arbeitsstellung eine zeitaufwendige Verbindung der beiden Kupplungsteile durch Verdrehen der Zinkenkreisel von Hand durchgeführt werden. Außerdem liegt die vertikale Schwenkachse außerhalb der Kreiselgetriebe-Achse, so daß sich dadurch beim Schwenken zwangläufig die Transportbreite erhöht. Insbesondere wirkt sich dies bei großen Durchmessern der Zinkenkreisel nachteilig aus.

Bei den Zahnradgetrieben, bei denen das Schwenken um die Kreiselgetriebeachse erfolgt, und ein Zahnritzel um die Drehachse eines Tellerrades läuft, treten oftmals Festigkeits- und Abdichtungsprobleme auf, so daß diese Ausführung sehr störanfällig ist. Wie die Klauenkupplungen sind auch die Doppelkreuzgelenk-Verbindungen nur für Zinkenkreisel mit einem kleinen Durchmesser anwendbar, da die vertikale Schwenkachse außerhalb der Kreiselgetriebe liegt.

Bei allen bisher bekannten Ausführungen ist die vertikale und horizontale Getriebeschwenkachse mit der Getriebeabtriebswelle so eng miteinander verknüpft, daß sie nur eine bestimmte Position einnehmen können. So kann beim Schwenken der seitlichen Tragarme um die Kreiselgetriebeachse die vertikale Schwenkachse mit der Achse der Zinkenkreisel nur konzentrisch verlaufen, während sie bei den Klauenkupplungs-Verbindungen und Doppelkreuzgelenken nur exzentrisch angeordnet werden kann und außerhalb des Kreiselgetriebes liegt. Die für die Bodenanpassung erforderliche horizontale Querachse liegt aus Platzgründen in der Draufsicht immer außerhalb des Kreiselgetriebes. Die Antriebswellen verlaufen innerhalb des Verbindungsgelenkrahmens.

Der Erfindung liegt die Aufgabe zugrunde, die Schwenkeinrichtung für die seitlichen Zinkenkreisel mit einem geringen technischen Aufwand so auszuführen, daß in der Transportstellung geringe Abmessungen in der Breite und Höhe erreicht werden, sowie die Fahrstabilität erhöht und vorteilhafte Antriebsverbindungen im Bereich der Schwenkachsen der Zinkenkreisel geschaffen werden.

Diese Aufgabe wird gelöst durch eine Maschinenausführung mit den kennzeichnenden Merkmalen des Patentanspruchs 1. Vorteilhafte Ausgestaltungen sind Gegenstand der Unteransprüche.

Die Erfindung wird nachfolgend anhand von mehreren in den Zeichnungen dargestellten Ausführungsbeispielen näher erläutert und beschrieben. Es zeigen:
- Figur 1: einen Kreiselheuwender mit 6 Zinkenkreiseln in einer Seitenansicht der Transportstellung,
- Figur 2: einen Kreiselheuwender mit 10 Zinkenkreiseln in einer Seitenansicht der Transportstellung,
- Figur 3: die Draufsicht nach Figur 2,
- Figur 4: einen Kreiselheuwender in einer Seitenansicht der Arbeitsstellung,
- Figur 5: die Draufsicht auf einen Kreiselheuwender mit 10 Zinkenkreiseln nach Figur 4
- Figur 6: die Draufsicht auf einen Kreiselheuwender mit 10 Zinkenkreiseln in der Arbeitsstellung - Grabenräumen
- Figur 7: die Hinteransicht eines Kreiselheuwenders mit 8 Zinkenkreiseln in der Arbeitsstellung
- Figur 8: eine Detaildarstellung des mittleren Bereichs nach Figur 7,
- Figur 9: die Draufsicht auf den mittleren Bereich nach Figur 8,
- Figur 10: eine Seitenansicht des Mittelkreisels mit Transportrad in der Arbeitsstellung,
- Figur 11: die Transportstellung nach Figur 10 und
- Figur 12: die Draufsicht auf ein Transportrad mit der Halterung

Ein in der Zeichnung dargestellter Vielkreisel-Heuwender (1) mit mehreren Tragarmen und daran angeordneten Zinkenkreiseln wird von einem Traktor (2) gezogen und angetrieben.

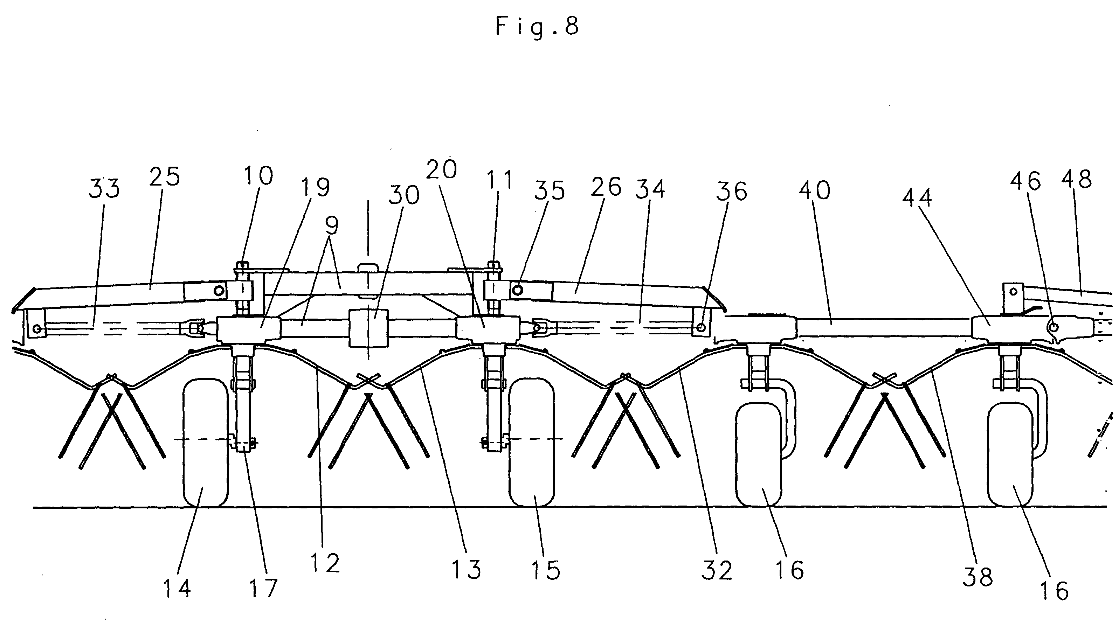

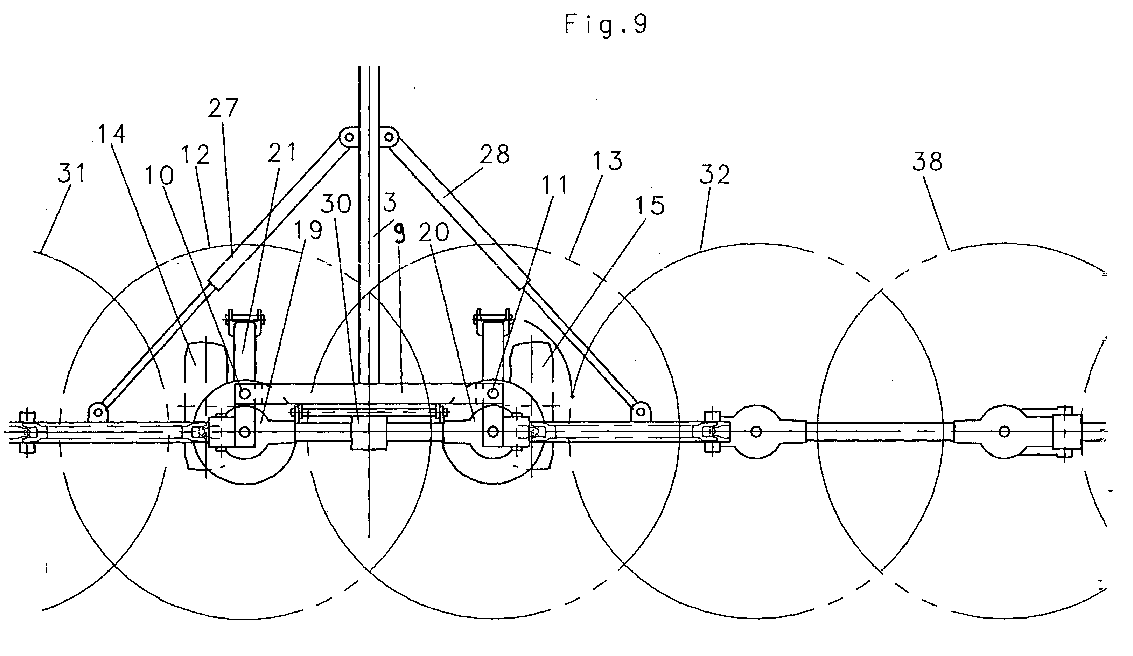

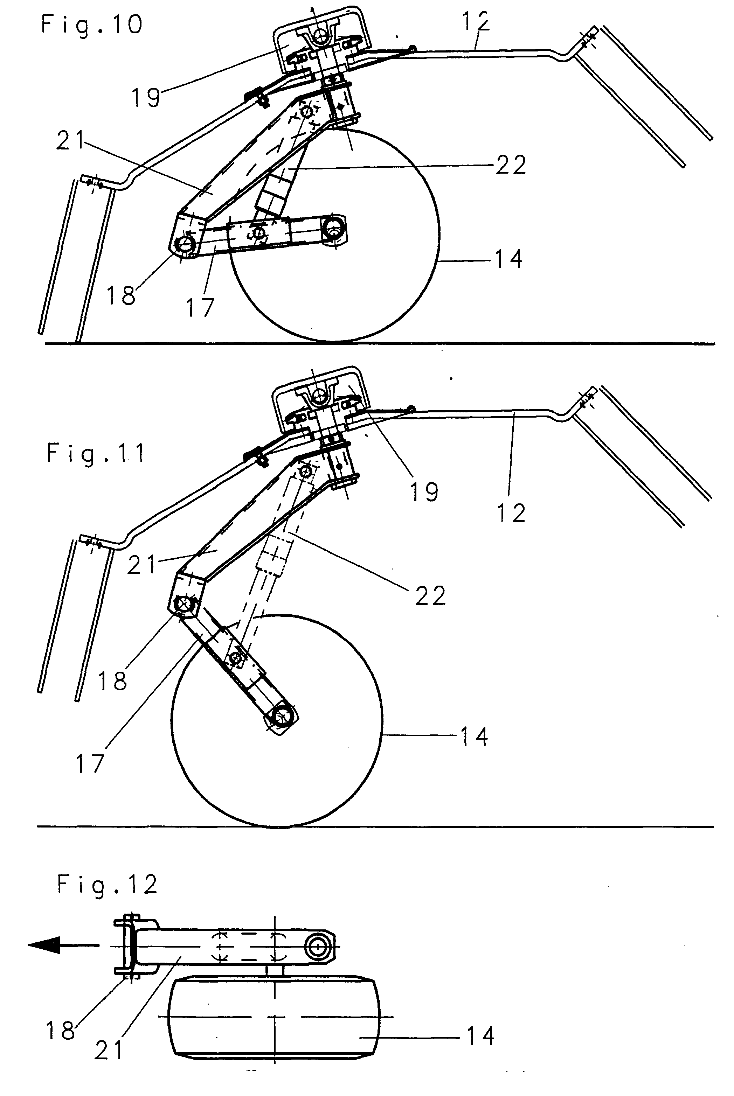

An einem in Fahrtrichtung verlaufenden starren Längsträger (3) ist an der Vorderseite eine Zugdeichsel (4) und ein Anschluß (5) für eine Gelenkwelle (6) zum Traktor (2) angeordnet. Die Zugdeichsel (4) ist am Längsträger (3) an einer quer zur Fahrtrichtung verlaufenden Achse (7) angelenkt, die in einem begrenzten Bereich eine Pendelung ermöglicht, und dadurch die Bodenunebenheiten zwischen dem Traktor (2) und dem Längsträger (3) ausgleicht. An der vorderen Seite ist die Zugdeichsel (4) mit der Zweipunkt-Anhängung (8) des Traktors (2) verbunden. Am Ende des Längsträgers (3) ist quer zu diesem ein Mittelrahmen (9) befestigt. An den Mittelrahmen (9) schließen sich beidseitig über Verbindungsrahmen (25, 26) um je eine vertikale Schwenkachse (10, 11) schwenkbare und miteinander verbundene Tragarme (39, 40, 49, 50, 49', 50') mit daran angeordneten Zinkenkreiseln (31, 32, 37, 38, 41, 42, 41', 42') an. An dem Mittelrahmen (9) sind zwei Mittelkreisel (12, 13) angeordnet. Der Mittelrahmen (9) ist mit zwei höheneinstellbaren Transporträdern (14, 15) versehen, die unterhalb der Mittelkreisel (12, 13) angebracht sind und die in der Transport- und in der Arbeitsstellung ständig mit dem Erdboden in Verbindung stehen. In der Arbeitsstellung übernehmen die Transporträder (14, 15) gleichzeitig die Funktion von Tasträdern. Die beiden Transporträder (14, 15) weisen im Vergleich zu den übrigen Tasträdern (16) größere Abmessungen im Druchmesser und in der Breite, sowie eine höhere Tragfähigkeit auf (Figur 8). Die Transporträder (14, 15) sind an einem schwenkbaren Radhalter (17) (Figur 10, 11, 12) befestigt, der über eine Schwenkachse (18) an einem mit den Kreiselgetrieben (19, 20) verbundenen starren Tragarm (21) angeordnet ist. Zwischen dem Tragarm (21) und dem Radhalter (17) ist ein Hydraulikzylinder (22) angeordnet, mit dessen Hilfe der Abstand der Mittelkreisel (12, 13) vom Erdboden in der Arbeits- und Transportstellung eingestellt wird. Die Hydrauliköl-Leitung zu dem Hydraulikzylinder (22) kann sowohl mittig durch die vertikale Achse der Kreiselgetriebe (19, 20) als auch durch eine an der Außenseite angeordnete Nut verlaufen. Zur Erhöhung der Standfestigkeit des Heuwenders in der Transport- und Arbeitsstellung weisen die beiden Transporträder (14, 15) eine größere Spurweite als die benachbarten Tasträder (16) auf (Figur 8, 9).

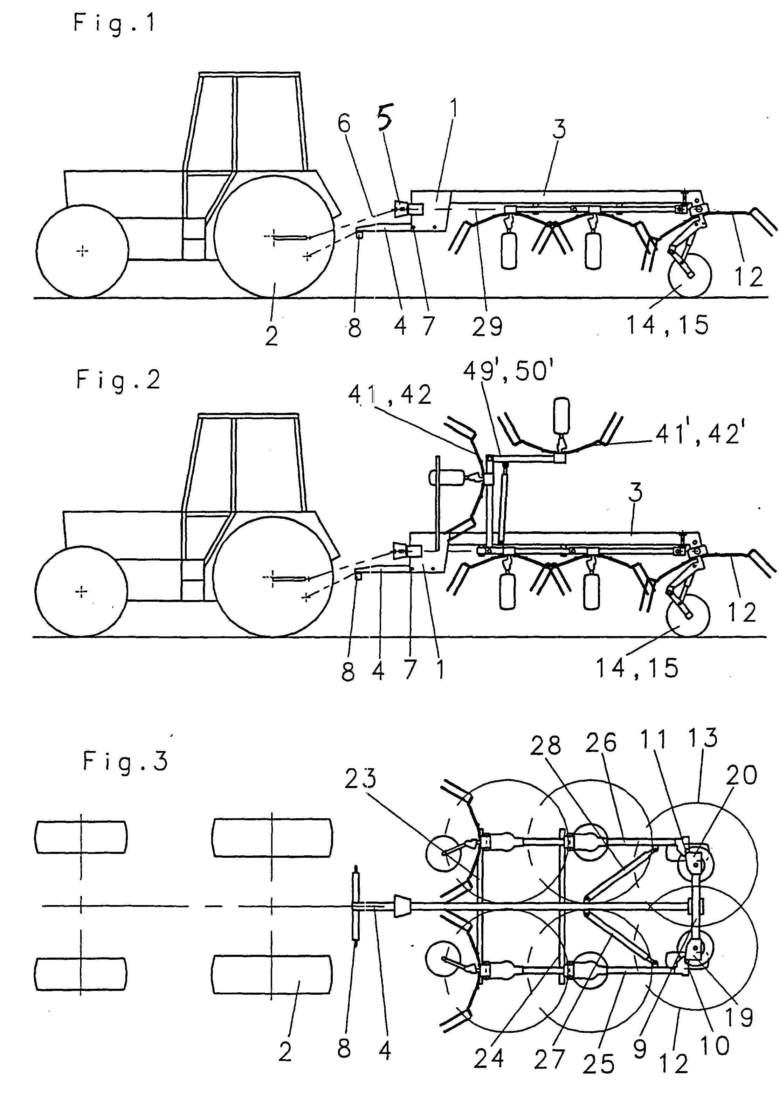

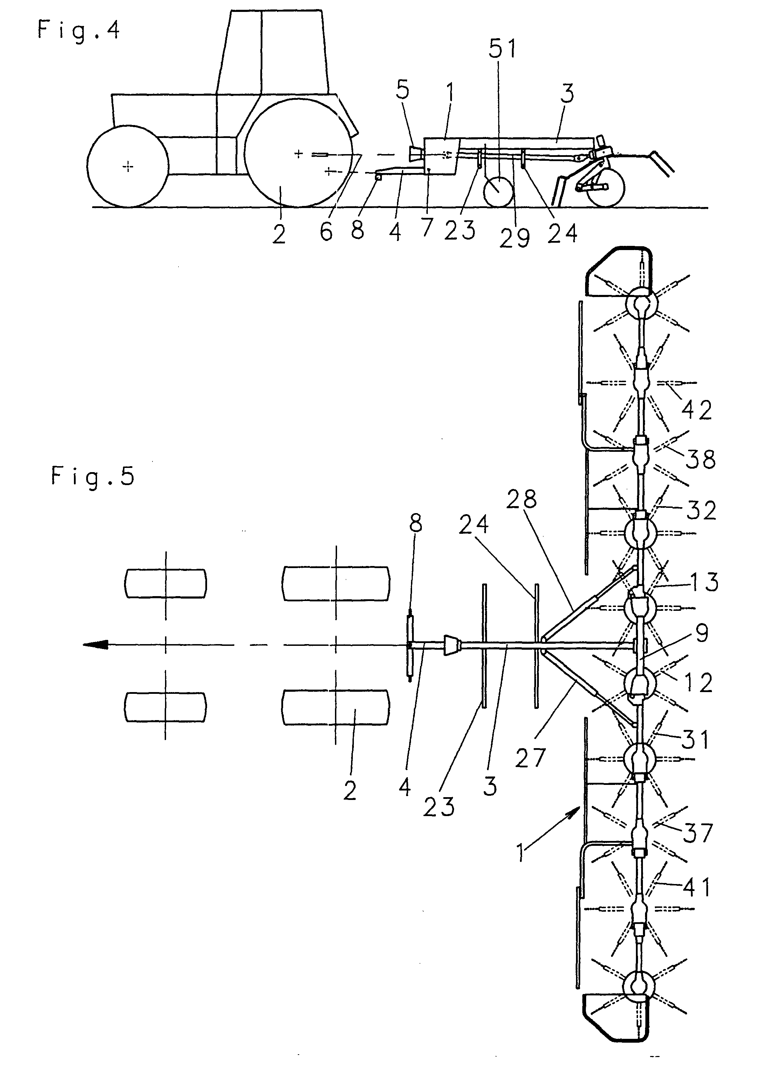

Am Längsträger (3) sind zwei Querstreben (23, 24) angeordnet (Figuren 3, 5), die in der Transportstellung als Aufsattel-Auflagen für die nach vorn geschwenkten Zinkenkreisel dienen. Die Querstreben (23, 24) können starr oder in nicht näher dargestellter Weise beispielsweise über Hydraulikzylinder höhenschwenkbar am Längsträger (3) befestigt sein. Zwischen dem Längsträger (3) und den seitlichen Verbindungsrahmen (25, 26) ist je ein Hydraulikzylinder (27, 28) angeordnet. Über diese Hydraulikzylinder (27, 28) werden die seitlichen Zinkenkreisel um die am Mittelrahmen (9) angeordneten vertikalen Schwenkachsen (10, 11) von der Arbeits- in die Transportstellung um etwa 90° nach vorn geschwenkt. In der geschwenkten Stellung liegen die Zinkenkreisel auf den Querstreben (23, 24) des Längsträgers (3) auf, wobei sie eine etwa parallele Lage zum Längsträger (3) einnehmen. In der Transportstellung werden dadurch geringe Abmessungen in der Breite und Höhe erzielt, sowie durch eine niedrige Schwerpunktlage und eine günstige Masse-Verteilung eine sichere Fahrstabilität erreicht. Um den Längsträger (3) möglichst kurz ausbilden zu können, ist es bei Heuwendern mit mehr als sechs Zinkenkreiseln vorteilhaft, vor dem Verschwenken der Seitenkreisel ein oder zwei Außenkreisel (41, 42), 41', 42') nach oben zu schwenken (Figuren 2 und 3). Die Außenkreisel nehmen dann in der geschwenkten Stellung eine vertikale Lage (41, 42) bzw. horizontale Kopflage (41', 42') ein. Auch in dieser Schwenkposition wird eine geringe Transporthöhe erreicht.

Im mittleren Bereich des Längsträgers (3) sind zur besseren Anpassung des Abstandes der Zinken an das jeweilige Bodenprofil zweckmäßigerweise ein oder mehrere Tasträder (51) angeordnet, die sich in der Arbeitsstellung auf dem Feldboden abstützen und eine Bodenkopierung ermöglichen (Figur 4). Dies ist besonders dann von Vorteil, wenn zwischen der Traktor-Anhängung und den Zinkenkreiseln ein grosser Abstand vorhanden ist. In der Transportstellung werden die Tasträder in nicht dargestellter Weise nach oben geschwenkt und wird damit die Bodenkopierung aufgehoben. Die Tasträder (51) sind als starre oder schwenkbare Nachlaufräder ausgebildet. Zur Gewährleistung der Funktion der Bodenkopierung muß die Zugdeichsel (4) in der vertikalen Richtung die erforderliche Bewegungsfreiheit aufweisen (Schwenkmöglichkeit um die Achse (7) in begrenztem Bereich).

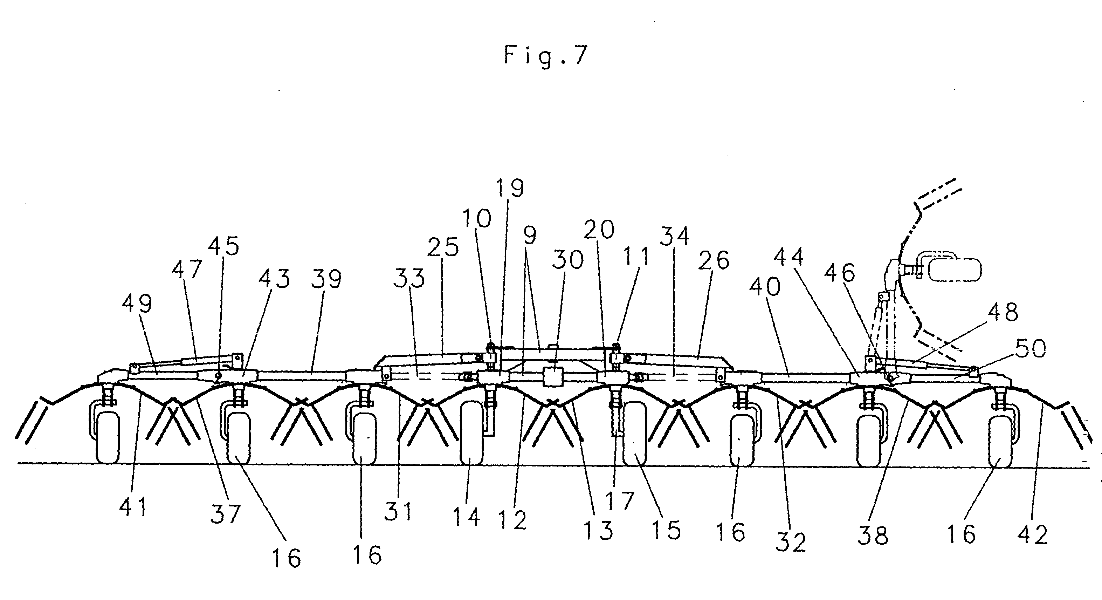

Der Antrieb der einzelnen Zinkenkreisel erfolgt vom Traktor (2) aus über eine Gelenkwelle (6). Von dieser aus erfolgt die Weiterleitung der Drehbewegung über eine unterhalb des Längsträgers (3) angeordnete Antriebswelle (29) (Figur 1) zum Eingangsgetriebe (30) am Mittelrahmen (9) (Figuren 7 und 8). An das Eingangsgetriebe (30) schließen sich beidseitig innerhalb des Mittelrahmens (9) verlaufende Wellen an, die zu den Kreiselgetrieben (19, 20) der starr miteinander verbundenen Mittelkreisel (12, 13) führen. Beide Wellen verlaufen somit sowohl in der Arbeits- als auch in der Transportstellung quer zur Fahrtrichtung. Die Weiterführung des Antriebes von den Mittelkreiseln (12, 13) zu den benachbarten ersten Seitenkreiseln (31, 32) erfolgt über Gelenkwellen (33, 34). Zwischen den vertikalen Schwenkachsen (10, 11) oberhalb der Mittelkreisel (12, 13) und den ersten Seitenkreiseln (31, 32) ist ein gelenkiger Verbindungsrahmen (25, 26) mit zwei horizontalen Schwenkachsen (35, 36) angeordnet. Somit sind der Antrieb und der Rahmen voneinander getrennt. Im Ausführungsbeispiel ist der Verbindungsrahmen (25, 26) oberhalb der Gelenkwellen (33, 34) angeordnet. Da die vertikalen Schwenkachsen (10,11) räumlich gesehen das geschlossene Kreiselgetriebe (19, 20) und auch den Kreiselantrieb nicht mehr berühren, können sie oberhalb der Kreiselgetriebe (19, 20) sowohl konzentrisch als auch jede beliebige exzentrische Lage einnehmen. Auch eine konstruktiv bedingte, seitlich vor den Kreiselgetrieben (19, 20) angeordnete Lage ist ohne weiteres möglich. Dann kann auch der Verbindungsrahmen (25, 26) seitlich vor den Kreiselgetrieben (19, 20) und den Gelenkwellen (33, 34) verlaufen. Auch die in Fahrtrichtung liegenden horizontalen Schwenkachsen (35, 36) lassen sich problemlos anordnen. Zwischen den ersten Seitenkreiseln (31, 32) und den zweiten Seitenkreiseln (37, 38) sind starre Tragarme (39, 40) mit einer ebenfalls starren Antriebsverbindung angeordnet. Eine ausreichende Anpassung der Zinkenkreisel an Bodenunebenheiten ist dadruch trotzdem gewährleistet. Durch die starre Ausführung der Tragarme (39, 40) wird das Aufsatteln auf die Querstreben (23, 24) des Längsträgers (3) wesentlich erleichtert. Die sich an die zweiten Seitenkreisel (37, 38) anschließenden Außenkreisel (41, 42) sind im Bereich der Kreiselgetriebe (43, 44) der zweiten Seitenkreisel (37, 38) gelenkig und schwenkbar an horizontalen Achsen (45, 46) angeschlossen. Das Schwenken der Außenkreisel (41, 42) um etwa 90° erfolgt über Hydraulikzylinder (47, 48), die oberhalb der Tragarme (49, 50) an den Kreiselgetrieben (43, 44) angelenkt sind. Die Antriebswellen zu den Außenkreiseln (41, 42) sind ebenfalls gelenkig an den horizontalen Achsen (45, 46) der Kreiselgetriebe (43, 44) angeschlossen. Je nach Ausführung sind an den zweiten Seitenkreiseln (37, 38) ein oder mehrere Außenkreisel (41, 42, 41', 42') angeschlossen.

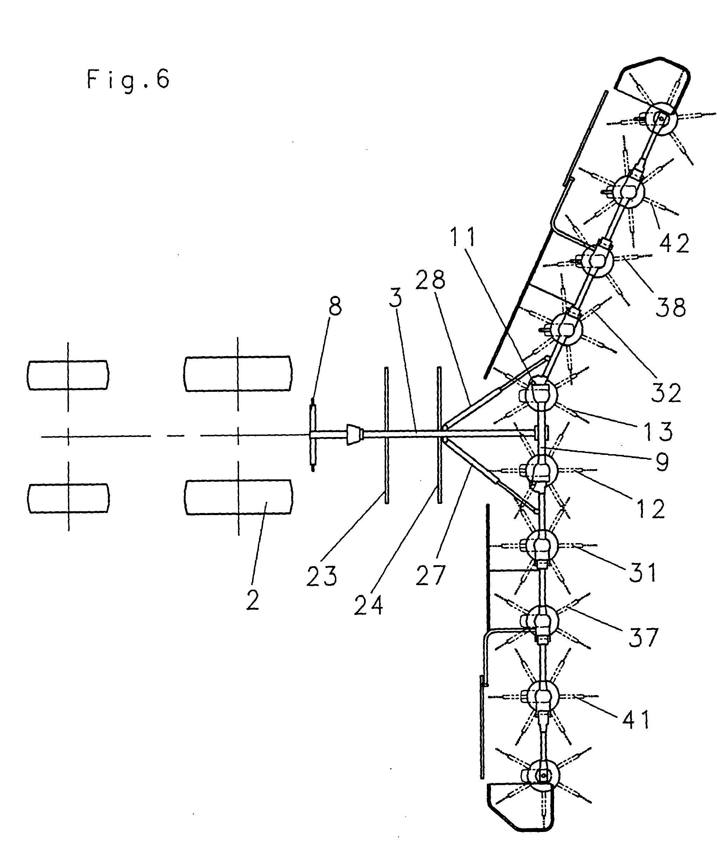

Bei dem in der Figur 6 dargestellten Kreiselheuwender mit einseitig schräg zur Fahrtrichtung gestellten Zinkenkreiseln in der Arbeitsstellung - Grabenräumen wird nach Lösen einer mechanischen Sperre wahlweise einer der beiden zwischen dem Längsträger (3) und den Verbindungsrahmen (25, 26) angeordneten Hydraulikzylinder (27, 28) weiter ausgefahren, so daß die jeweils gewünschte Schrägstellung der seitlichen Zinkenkreisel erreicht wird. Durch die Nutzung der ohnehin vorhandenen Hydraulikzylinder (27, 28) für den Einstellvorgang sind keine weiteren zusätzlichen Stelleinrichtungen erforderlich. Die Tasträder (16) der Seiten- und Außenkreisel (31, 32; 37, 38; 41, 42; 41', 42') sind als arretierbare Nachlaufräder ausgebildet. Während die Tasträder (16) an der schräg gestellten Seite frei nachlaufen können, sind die übrigen Tasträder (16) zur Spurhaltung in der Fahrtrichtung arretiert.

## Patentansprüche

1. Landwirtschaftliche Arbeitsmaschine, die von einem Traktor gezogen und angetrieben wird und die von einer breiten Arbeitsstellung in eine schmale Transportstellung veränderbar ist, insbesondere Vielkreiselheuwender (1), mit einem starren, in Fahrtrichtung verlaufenden Längsträger (3) und einem quer dazu angeordneten Mittelrahmen (9), an den sich beidseitig mehrere schwenkbeweglich miteinander verbundene Tragarme (39, 40, 49, 50, 49', 50') anschließen, wobei am Mittelrahmen (9) und an den Tragarmen (39 40, 49, 50, 49', 50') Arbeitswerkzeuge (31, 32, 37, 38, 41, 42, 41', 42') angeordnet sind, die in der Arbeitsstellung quer zur Fahrtrichtung nebeneinander angeordnet sind und die sich über Tasträder (14, 15, 16) auf dem Erdboden abstützen,
**dadurch gekennzeichnet**,
daß die an den seitlichen Tragarmen (39, 40) angeordneten Arbeitswerkzeuge (31, 32, 37, 38) von der Arbeitsstellung in die Transportstellung um am Mittelrahmen (9) angebrachte vertikale Schwenkachsen (10, 11) um etwa 90° nach vorn schwenkbar sind und daß sie in der geschwenkten Stellung etwa parallel zum Längsträger (3) verlaufend angeordnet sind.

2. Landwirtschaftliche Arbeitsmaschine nach Anspruch 1,
**dadurch gekennzeichnet**,
daß den am Mittelrahmen angeordneten Arbeitswerkzeugen (12, 13) kombinierte Tast- und Transporträder (14, 15) zugeordnet sind.

3. Landwirtschaftliche Arbeitsmaschine nach Anspruch 1 oder 2, **dadurch gekennzeichnet**, daß eine Zugdeichsel (4) am Längsträger (3) an einer quer zur Fahrtrichtung verlaufenden Achse (7) in einem begrenzten Bereich schwenkbar angelenkt ist.

4. Landwirtschaftliche Arbeitsmaschine nach Anspruch 2, **dadurch gekennzeichnet**, daß die beiden Transporträder (14, 15) im Vergleich zu den übrigen Tasträdern (16) größere Abmessungen im Durchmesser und in der Breite sowie eine höhere Tragfähigkeit aufweisen.

5. Landwirtschaftliche Arbeitsmaschine nach den Ansprüchen 2 - 4, **dadurch gekennzeichnet**, daß die Transporträder (14, 15) an einem mit einem starren Tragarm (21) verbundenen schwenkbaren Radhalter (17) befestigt sind, wobei zwischen dem Tragarm (21) und dem Radhalter (17) ein Hydraulikzylinder (22) angeordnet ist.

6. Landwirtschaftliche Arbeitsmaschine nach Anspruch 5, **dadurch gekennzeichnet**, daß die Hydraulik-Ölleitung zu dem Hydraulikzylinder (22) mittig durch die vertikale Achse des Kreiselgetriebes (19, 20) oder durch eine an der Aussenseite der Achse angeordnete Nut verläuft.

7. Landwirtschaftliche Arbeitsmaschine nach den Ansprüchen 2 und 4, **dadurch gekennzeichnet**, daß die beiden Transporträder (14, 15) eine größere Spurweite als die benachbarten Tasträder (16) aufweisen.

8. Landwirtschaftliche Arbeitsmaschine nach Anspruch 1 oder 2, **dadurch gekennzeichnet**, daß am Längsträger (3) ein oder mehrere Querstreben (23, 24) starr oder in der Höhe schwenkbar angeordnet sind.

9. Landwirtschaftliche Arbeitsmaschine nach einem oder mehreren der vorhergehenden Ansprüche,
**dadurch gekennzeichnet**,
daß
a) zwischen den Antrieben der Mittelkreisel (12, 13) und den benachbarten ersten Seitenkreiseln (31, 32) Gelenkwellen (33, 34) angeordnet sind,
b) zwischen den vertikalen Schwenkachsen (10, 11) am Mittelrahmen (9) und den ersten Seitenkreiseln (31, 32) ein gelenkiger Verbindungsrahmen (25, 26) mit zwei horizontal verlaufenden Schwenkachsen (35, 36) angeordnet ist,
c) zwischen den ersten Seitenkreiseln (31, 32) und den zweiten Seitenkreiseln (37, 38) starre Tragarme (39, 40) angeordnet sind.

10. Landwirtschaftliche Arbeitsmaschine nach Anspruch 9, **dadurch gekennzeichnet**, daß sich an die zweiten Seitenkreisel (37, 38) ein oder mehrere Außenkreisel (41, 42, 41', 42') anschließen, die im Bereich der Kreiselgetriebe (43, 44) der zweiten Seitenkreisel (37, 38) gelenkig und schwenkbar angelenkt sind.

11. Landwirtschaftliche Arbeitsmaschine nach vorhergehenden Ansprüchen, **dadurch gekennzeichnet, daß** zwischen dem Längsträger (3) und den seitlichen Verbindungsrahmen (25, 26) je ein Hydraulikzylinder (27, 28) angeordnet ist.

12. Landwirtschaftliche Arbeitsmaschine nach Anspruch 11, **dadurch gekennzeichnet**, daß den Hydraulikzylindern (27, 28) eine mechanische Sperre zugeordnet ist, nach deren Lösen durch ein weiteres Ausfahren der Kolbenstangen der Hydraulikzylinder (27, 28) wahlweise eine einseitige Schrägstellung der seitlichen Zinkenkreisel einstellbar ist.

13. Landwirtschaftliche Arbeitsmaschine nach vorhergehenden Ansprüchen, **dadurch gekennzeichnet, daß** unterhalb des Längsträgers (3) im mittleren Bereich ein oder mehrere Tasträder (51) angeordnet sind.

14. Landwirtschaftliche Arbeitsmaschine nach Anspruch 13, **dadurch gekennzeichnet**, daß die Tasträder (51) am Längsträger (3) in Höhenrichtung schwenkbar und als Nachlaufräder gestaltet sind.

15. Landwirtschaftliche Arbeitsmaschine nach Anspruch 10, **dadurch gekennzeichnet**, daß vor dem Verschwenken der Seitenkreisel (31, 32, 37, 38) ein oder zwei Außenkreisel (41, 42) um etwa 90° nach oben schwenkbar sind.

16. Landwirtschaftliche Arbeitsmaschine nach Ansprüchen 10 und 15, **dadurch gekennzeichnet**, daß vor dem Verschwenken der Seitenkreisel (31, 32, 37, 38) Außenkreisel (41, 42) um etwa 90° nach oben und weitere Außenkreisel (41', 42') an den Außenkreiseln (41, 42) um etwa 90° in eine Kopflage über den Seitenkreiseln (37, 38) schwenkbar sind.

## Claims

1. An agricultural implement which is pulled and driven by a tractor and which is changeable from a wide working position into a narrow transport position, in particular a multi-rotor hay tedder (1), comprising a rigid longitudinal carrier (3) which extends in the direction of travel and a central frame (9) which is arranged transversely with respect to the longitudinal carrier and to which are connected at both sides a plurality of pivotably movably interconnected carrier arms (39, 40, 49, 50, 49', 50'), wherein arranged on the central frame (9) and on the carrier arms (39, 40, 49, 50, 49', 50') are working tools (31, 32, 37, 38, 41, 42, 41', 42') which in the working position are disposed in mutually juxtaposed relationship transversely with respect to the direction of travel and which are supported on the ground by way of sensing wheels (14, 15, 16), **characterised in that** the working tools (31, 32, 37, 38) which are arranged on the lateral carrier arms (39, 40) are pivotable through about 90° forwardly from the working position into the transport position about vertical pivot axes (10, 11) mounted to the central frame (9) and that in the pivoted position they are arranged to extend substantially parallel to the longitudinal carrier (3).

2. An agricultural implement according to claim 1 **characterised in that** combined sensing and transport wheels (14, 15) are associated with the working tools (12, 13) arranged on the central frame.

3. An agricultural implement according to claim 1 or claim 2 **characterised in that** a towbar (4) is pivotable in a limited range on the longitudinal carrier (3) at an axis (7) extending transversely with respect to the direction of travel.

4. An agricultural implement according to claim 2 **characterised in that** the two transport wheels (14, 15), in comparison with the other sensing wheels (16), are of larger dimensions in diameter and in width and have a higher load-bearing capability.

5. An agricultural implement according to claims 2 to 4 **characterised in that** the transport wheels (14, 15) are fixed to a pivotable wheel holder (17) connected to a rigid carrier arm (22), a hydraulic cylinder (23) being arranged between the carrier arm (22) and the wheel holder (17).

6. An agricultural implement according to claim 5 **characterised in that** the hydraulic oil line to the hydraulic cylinder (22) extends centrally through the vertical spindle of the rotor transmission unit (19, 20) or through a groove arranged at the outside of the spindle.

7. An agricultural implement according to claims 2 and 4 **characterised in that** the two transport wheels (14, 15) have a greater track width than the adjacent sensing wheels (16).

8. An agricultural implement according to claim 1 or claim 2 **characterised in that** one or more transverse struts (23, 24) are arranged on the longitudinal carrier (3) rigidly or pivotably in respect of height.

9. An agricultural implement according to one or more of the preceding claims **characterised in that**
a) universal-joint shafts (33, 34) are arranged between the drives of the central rotors (12, 13) and the adjacent first lateral rotors (31, 32),
b) a pivotal connecting frame (25, 26) with two horizontally extending pivot axes (35, 36) is arranged between the vertical pivot axes (10, 11) on the central frame (9) and the first lateral rotors (31, 32), and
c) rigid carrier arms (39, 40) are arranged between the first lateral rotors (31, 32) and the second lateral rotors (37, 38).

10. An agricultural implement according to claim 9 **characterised in that** adjoining the second lateral rotors (37, 38) are one or more outer rotors (41, 42, 41', 42') which are articulatedly and pivotably mounted in the region of the rotor transmission units (43, 44) of the second lateral rotors (37, 38).

11. An agricultural implement according to the preceding claims **characterised in that** a respective hydraulic cylinder (27, 28) is arranged between the longitudinal carrier (3) and each of the lateral connecting frames (25, 26).

12. An agricultural implement according to claim 11 **characterised in that** a mechanical lock is associated with the hydraulic cylinders (27, 28), wherein after release of the mechanical lock inclined positioning at one side of the lateral tine rotors can be selectively set by further extension of the piston rods of the hydraulic cylinders (27, 28).

13. An agricultural implement according to the preceding claims **characterised in that** one or more sensing wheels (51) are arranged beneath the longitudinal carrier (3) in the central region.

14. An agricultural implement according to claim 13 **characterised in that** the sensing wheels (15) are pivotable in the heightwise direction on the longitudinal carrier (3) and are in the form of trailing wheels.

15. An agricultural implement according to claim 10 **characterised in that**, prior to the pivotal movement of the lateral rotors (31, 32, 37, 38), one or two outer rotors (41, 42) are pivotable upwardly through about 90°.

16. An agricultural implement according to claims 10 and 15 **characterised in that**, prior to the pivotal movement of the lateral rotors (31, 32, 37, 38), outer rotors (41, 42) are pivotable upwardly through about 90° and further outer rotors (41', 42') at the outer rotors (41, 42) are pivotable through about: 90° into an inverted position over the lateral rotors (37, 38).

## Revendications

1. Machine de travail agricole qui est tractée et entraînée par un tracteur et qui est modifiable d'une position de travail large à une position de transport étroite, notamment faneuse (1) à plusieurs rotors, comprenant un longeron (3) rigide s'étendant dans la direction de marche, et un cadre médian (9) qui est disposé transversalement au longeron et auquel se raccordent, de part et d'autre, plusieurs bras porteurs (39, 40, 49, 50, 49', 50') reliés entre eux de façon mobile en pivotement, des outils de travail (31, 32, 37, 38, 41, 42, 41', 42') étant disposés sur le cadre médian (9) et sur les bras porteurs (39, 40, 49, 50, 49', 50'), ces outils étant, dans la position de travail, disposés côte à côte transversalement à la direction de marche et s'appuyant sur le sol en passant par des roues de jauge (14, 15, 16),
caractérisée par le fait
que les outils de travail (31, 32, 37, 38) disposés sur les bras porteurs latéraux (39, 40) peuvent être amenés de la position de travail à la position de transport par pivotement d'environ 90 degrés vers l'avant autour d'axes de pivotement (10, 11) verticaux disposés sur le cadre médian (9) et sont, dans la position de transport, disposés à peu près parallèlement au longeron (3).

2. Machine de travail agricole suivant la revendication 1,
caractérisée par le fait
que des roues combinées de jauge et de transport (14, 15) sont associées aux outils de travail (12, 13) disposés sur le cadre médian.

3. Machine de travail agricole suivant la revendication 1 ou 2,
caractérisée par le fait qu'un timon (4) est articulé sur le longeron (3) de manière à pouvoir pivoter de façon limitée autour d'un axe (7) s'étendant transversalement à la direction de marche.

4. Machine de travail agricole suivant la revendication 2, caractérisée par le fait que les deux roues de transport (14, 15) présentent, par rapport aux autres roues de jauge (16), un diamètre et une largeur accrus ainsi qu'une capacité de charge accrue.

5. Machine de travail agricole suivant les revendications 2-4,
caractérisée par le fait que les roues de transport (14, 15) sont fixées à un porte-roue (17) pivotant, relié à un bras porteur rigide (21), un vérin hydraulique (22) étant disposé entre le bras porteur (21) et le porte- roue (17).

6. Machine de travail agricole suivant la revendication 5, caractérisée par le fait que la canalisation d'huile hydraulique menant au vérin hydraulique (22) s'étend en position centrale à travers l'axe vertical du mécanisme (19, 20) d'entraînement en rotation des rotors ou dans une rainure disposée sur le côté extérieur dudit axe.

7. Machine de travail agricole suivant les revendications 2 et 4,
caractérisée par le fait que les deux roues de transport (14, 15) présentent un écartement plus grand que les roues de jauge (16) voisines.

8. Machine de travail agricole suivant la revendication 1 ou 2,
caractérisée par le fait qu'un ou plusieurs bras transversaux (23, 24) sont disposés de façon rigide ou de manière à pouvoir pivoter vers le haut sur le longeron (3).

9. Machine de travail agricole suivant une ou plusieurs des revendications précédentes, caractérisée par le fait que
a) des arbres articulés (33, 34) sont disposés entre les mécanismes d'entraînement des rotors médians (12, 13) et les premiers rotors latéraux (31, 32) voisins,
b) un cadre de liaison articulé (25, 26) avec deux axes de pivotement (35, 36) horizontaux est disposé entre les axes de pivotement verticaux (10, 11) sur le cadre médian (9) et les premiers rotors latéraux (31, 32), et
c) des bras porteurs rigides (39, 40) sont disposés entre les premiers rotors latéraux (31, 32) et les seconds rotors latéraux (37, 38).

10. Machine de travail agricole suivant la revendication 9,
caractérisée par le fait que les seconds rotors latéraux (37, 38) sont suivis d'un ou de plusieurs rotors extérieurs (41, 42, 41', 42') qui sont articulés de manière à pouvoir pivoter dans la zone des mécanismes d'entraînement (43, 44) des seconds rotors latéraux (37, 38).

11. Machine de travail agricole suivant des revendications précédentes, caractérisée par le fait qu'un vérin hydraulique (27, 28) est disposé entre le longeron (3) et les cadres de liaison latéraux (25, 26), respectivement.

12. Machine de travail agricole suivant la revendication 11,
caractérisée par le fait qu'un verrouillage mécanique est associé aux vérins hydrauliques (27, 28), après libération duquel, par un déploiement supplémentaire de la tige de piston des vérins hydrauliques (27, 28), les rotors latéraux peuvent être ramenés sélectivement dans une position oblique unilatérale.

13. Machine de travail agricole suivant des revendications précédentes, caractérisée par le fait qu'une ou plusieurs roues de jauge (51) sont disposées en dessous du longeron (3) dans la zone médiane.

14. Machine de travail agricole suivant la revendication 13,
caractérisée par le fait que les roues de jauge (51) sont montées pivotantes vers le haut sur le longeron (3) et sont réalisées sous forme de roues auto-orientables.

15. Machine de travail agricole suivant la revendication 10,
caractérisée par le fait qu'avant le pivotement des rotors latéraux (31, 32, 37, 38), un ou deux rotors extérieurs (41, 42) peuvent être relevés par pivotement d'environ 90 degrés.

16. Machine de travail agricole suivant les revendications 10 et 15,
caractérisée par le fait qu'avant le pivotement des rotors latéraux (31, 32, 37, 38), des rotors extérieurs (41, 42) peuvent être relevés par pivotement d'environ 90 degrés et d'autres rotors extérieurs (41', 42') peuvent être amenés par pivotement d'environ 90 degrés par rapport auxdits rotors extérieurs (41, 42), en position renversée au-dessus des rotors latéraux (37, 38).
